# EUROPÄISCHE PATENTANMELDUNG

(11) **EP 4 245 495 A1**
(43) Veröffentlichungstag der Anmeldung: **20.09.2023**
(21) Anmeldenummer: 23158784.1
(22) Anmeldetag: 27.02.2023
(51) Int. Cl.: B29B 13/06, F26B 17/14

(54) **REINIGUNGSVORRICHTUNG ZUM REINIGEN, INSBESONDERE ENTGASEN, VON THERMOPLASTISCHEN KUNSTSTOFFEN**

(30) Priorität: 17.03.2022 AT 702022
(71) Anmelder: "Eisbär" Trockentechnik GmbH, 6840 Götzis (AT)
(72) Erfinder: Spiegel, Martin, 6850 Dornbirn (AT)
(74) Vertreter: Torggler & Hofmann Patentanwälte - Rankweil

(57) **Zusammenfassung**

Reinigungsvorrichtung zum Reinigen, insbesondere Entgasen, von thermoplastischen Kunststoffen, insbesondere Polyolefinen, mit einem Reinigungsbehälter für den zu reinigenden thermoplastischen Kunststoff und einer Zufuhrvorrichtung zum Zuführen des zu reinigenden thermoplastischen Kunststoffs in den Reinigungsbehälter in schüttfähiger Form, wobei der Reinigungsbehälter eine Gaszufuhröffnung aufweist und ein Dampfgenerator zum Erzeugen von Wasserdampf vorgesehen ist, welcher zum Zuführen des Wasserdampfs zum Reinigungsbehälter mit der Gaszufuhröffnung verbunden ist.

## Beschreibung

Die vorliegende Erfindung betrifft eine Reinigungsvorrichtung zum Reinigen, insbesondere Entgasen, von thermoplastischen Kunststoffen, insbesondere Polyolefinen, gemäß den Merkmalen des Oberbegriffs des Anspruchs 1 sowie ein Verfahren zum Reinigen, insbesondere Entgasen, von thermoplastischen Kunststoffen, insbesondere Polyolefinen.

Gattungsgemäße Vorrichtungen beinhalten einen Reinigungsbehälter für den zu reinigenden thermoplastischen Kunststoff und eine Zufuhrvorrichtung zum Zuführen des zu reinigenden thermoplastischen Kunststoffs in den Reinigungsbehälter in schüttfähiger, insbesondere rieselfähiger, Form, wobei der Reinigungsbehälter eine Gaszufuhröffnung aufweist.

Das Reinigen, insbesondere Entgasen, von thermoplastischen Kunststoffen ist insbesondere dann notwendig, wenn es sich um recyclierten Kunststoff handelt, der wiederverwendet werden soll. Denn beispielsweise bei der Verwendung als Verpackungsmaterial ist der thermoplastische Kunststoff natürlich den verpackten Gegenständen und Stoffen ausgesetzt. Beim Recyclieren des Kunststoffs gehen aufgrund dessen geruchsbelastete Gase oder andere Stoffe im thermoplastischen Kunststoff in Lösung, sodass der recyclierte thermoplastische Kunststoff selbst auch geruchsbelastet ist oder andere Belastungen aufweist.

Um dem entgegenzuwirken, schlägt die WO 2011/068717 A1 vor Polyolefin-Späne über mehr als drei Stunden mit Heißluft zu kontaktieren. Die Heißluft hat dabei eine gewisse Schleppwirkung, wodurch in den Polyolefin-Spänen gelöste Gase ausgewaschen werden. Die so behandelten Polyolefin-Späne weisen dann eine geringere Geruchsbelastung auf.

Dieses Verfahren aus dem Stand der Technik ist aus mehreren Gründen verbesserungsfähig. Zum einen ist die erwähnte Schleppwirkung recht ineffektiv, sodass viel Gas im Kunststoff verbleibt.

Zum anderen führt dies dazu, dass das Verfahren, wie erwähnt, mindestens drei Stunden (bis zu zehn Stunden) dauert, sodass ein verkürztes Verfahren natürlich vorteilhaft wäre.

Die Aufgabe der Erfindung ist es, eine Reinigungsvorrichtung und ein Verfahren bereitzustellen, womit thermoplastischer Kunststoff effektiver, das heißt insbesondere schneller und/oder wirksamer, gereinigt werden kann.

Hinsichtlich der Reinigungsvorrichtung wird diese Aufgabe mit den Merkmalen des Anspruchs 1 gelöst, nämlich indem ein Dampfgenerator zum Erzeugen von Wasserdampf vorgesehen ist, welcher zum Zuführen des Wasserdampfs zum Reinigungsbehälter mit der Gaszufuhröffnung verbunden ist.

Hinsichtlich des Verfahrens wird die Aufgabe mit den Merkmalen des Anspruchs 8 gelöst, nämlich indem, vorzugsweise unter Verwendung einer erfindungsgemäßen Vorrichtung, Wasserdampf generiert wird und ein zu reinigender thermoplastischer Kunststoff in schüttfähiger Form dem Wasserdampf ausgesetzt wird.

Das erfindungsgemäße Verfahren kann als Herstellungsverfahren für gereinigten recyclierten thermoplastischen Kunststoff aufgefasst werden. Schutz wir deshalb auch für ein solches Verfahrensprodukt, nämlich den gereinigten recyclierten thermoplastischen Kunststoff, begehrt.

Schutz wird außerdem für die Verwendung eines Dampfgenerators zum Erzeugen von Wasserdampf beim Reinigen von thermoplastischen Kunststoffen, insbesondere Polyolefinen, begehrt.

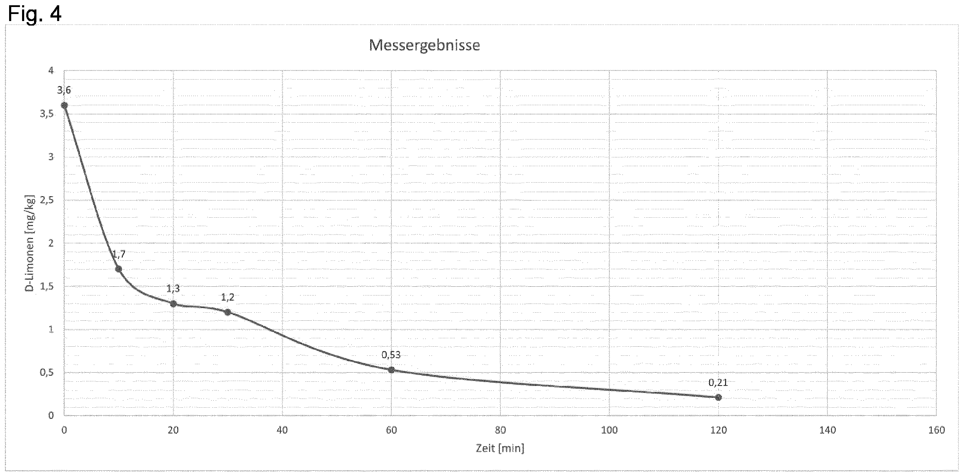

Überaschenderweise hat sich herausgestellt, dass Wasserdampf eine sehr viel bessere Schleppwirkung als Heißluft bewirkt, sodass die im thermoplastischen Kunststoff vorliegenden Gase und anderen unerwünschten Stoffe weitaus effektiver entfernt werden können (siehe dazu Fig. 4), was außerdem kürzere Verweilzeiten erlaubt.

Aufgrund der Größe des Wassermoleküls an sich, war dies nicht wirklich zu erwarten. Es wird vermutet, dass die Wasserstoffatome, die Teil des Wassermoleküls sind und natürlich sehr viel kleiner als beispielsweise in der Luft vorhandene Stickstoffmoleküle sind, die erfindungsgemäße Schleppwirkung erzeugen.

Die erfindungsgemäße Reinigungsvorrichtung könnte auch als Dampf-Reiniger bezeichnet werden.

Es ist zu erwähnen, dass der Gasgenerator im Reinigungsbehälter integriert sein kann oder separat ausgeführt sein kann. Die Gaszufuhröffnung kann dann beispielweise durch einen Querschnitt eines Gefäßes sein, welches den Reinigungsbehälter beinhaltet oder bildet.

Im Rahmen der Erfindung kann unter einem Reinigen von thermoplastischen Kunststoffen ein Entfernen von unerwünschten Stoffen aus dem thermoplastischen Kunststoff verstanden werden.

Im Rahmen der Erfindung werden unter unerwünschten Stoffen, die erfindungsgemäß aus dem zu reinigenden thermoplastischen Kunststoff entfernt werden sollen, jegliche Stoffe verstanden, die unter Einwirkung des Wasserdampfs einer Schleppwirkung unterliegen und dadurch zumindest teilweise aus dem thermoplastischen Kunststoff entfernt werden können.

Bei den unerwünschten Stoffen kann es sich bevorzugt Gase handeln, welche aus dem zu reinigenden (entgasenden) thermoplastischen Kunststoff zu entfernen (zu entgasen) sind. Aber auch andere Stoffe, beispielsweise Schadstoffe, welche beispielsweise gesundheits- und/oder umweltgefährdend sein können, insbesondere Flüssigkeiten, können unerwünschte Stoff im Sinne der Erfindung sein.

Im Rahmen der Erfindung kann darunter, dass der zu reinigende thermoplastische Kunststoff in schüttfähiger Form vorliegt, verstanden werden, dass der thermoplastische Kunststoff im Vergleich zum Reinigungsbehälter in kleinen Teilstücken vorliegt, die mittels üblicher Transportvorrichtungen (beispielsweise Vakuumförderer, Schneckenförderer usw.) in den Reinigungsbehälter befördert werden können.

Der thermoplastische Kunststoff kann besonders bevorzugt als Polymer vorliegen.

Beispiele wären thermoplastischer Kunststoff in Form von Pellets, Granulat und/oder Spänen.

In bevorzugten Ausführungsformen kann der thermoplastische Kunststoff in rieselfähiger Form vorliegen, das heißt in solcher Form, dass der thermoplastische Kunststoff beispielsweise unter der Einwirkung von Schwerkraft von selbst vertikal und/oder horizontal fließen kann.

Weitere vorteilhafte Weiterbildungen der Erfindung sind in den abhängigen Ansprüchen definiert.

Bevorzugt kann eine Abfuhrvorrichtung zum Abführen des gereinigten thermoplastischen Kunststoffs aus dem Reinigungsbehälter vorgesehen sein.

Die Zufuhrvorrichtung und/oder die Abfuhrvorrichtung kann eine Zellradschleuse und/oder zumindest ein Absperrventil aufweisen.

Der Reinigungsbehälter kann eine Entgasungsöffnung zum Abführen von Wasserdampf zusammen mit aus dem thermoplastischen Kunststoff entwichenen Gasen aufweisen.

Die Entgasungsöffnung kann bevorzugt an einer Oberseite des Reinigungsbehälters angeordnet sein.

Alternativ oder zusätzlich kann ein Entgasungsventil vorhanden sein, mittels welchem ein Druck und/oder ein Volumenstrom des austretenden Wasserdampfs gemeinsam mit den aus den thermoplastischen Kunststoff entwichenen Gasen beeinflusst werden kann.

Dem Reinigungsbehälter kann eine Trocknungsvorrichtung für den gereinigten thermoplastischen Kunststoff nachgeschaltet sein. Beispielsweise mittels Luft (beispielsweise Heißluft und/oder Kaltluft) kann vom Reinigungsvorgang stammende Feuchtigkeit entfernt werden.

Dabei kann es vorgesehen sein, dass Wärme aus der Trocknungsvorrichtung als Vorwärme für den Gasgenerator verwendet wird. Hierfür kann in der Trocknungsvorrichtung ein Wärmetauscher vorhanden sein, mittels welchem Wasser erwärmt wird, und das so vorgewärmte Wasser kann dem Dampfgenerator zugeführt werden.

Es ist zu erwähnen, dass der gereinigte thermoplastische Kunststoff durch einen Luftstrom zum Trocknen auch temperiert werden kann, je nach weiterer Verwendung (beispielsweise relativ kalt bei nachfolgender Lagerung oder nachfolgendem Transport oder relativ warm bei nachfolgender Extrusion).

Der Reinigungsbehälter kann eine Kondensatöffnung zum Abführen von kondensiertem Wasser - gegebenenfalls gemeinsam mit aus dem thermoplastischen Kunststoff entwichenen (unerwünschten) Stoffen - aus dem Reinigungsbehälter aufweist.

Die Kondensatöffnung kann bevorzugt an einer Unterseite des Reinigungsbehälters angeordnet sein.

Alternativ oder zusätzlich kann ein Kondensatventil vorhanden sein, mittels welchem ein Druck und/oder ein Volumenstrom des austretenden Wassers - gegebenenfalls gemeinsam mit aus dem thermoplastischen Kunststoff entwichenen Stoffen - beeinflusst werden kann.

Es kann eine Steuer- oder Regeleinrichtung zum Steuern oder Regeln zumindest eines der folgenden vorgesehen sein: Dampfgenerator, Zufuhrvorrichtung, Abfuhrvorrichtung, zumindest ein Ventil an der Entgasungsöffnung und/oder am Kondensatöffnung, insbesondere das Entgasungsventil und/oder das Kondensatventil.

Es kann ein Drucksensor vorhanden sein, mittels welchem ein Druck im Reinigungsbehälter und/oder an der Entgasungsöffnung detektierbar ist.

Der Drucksensor kann mit der Steuer- oder Regeleinrichtung signalverbunden sein, sodass Signale des Drucksensors als rückgeführte Größe für die von der Steuer- oder Regeleinrichtung durchgeführte Steuerung und/oder Regelung eingesetzt werden können.

Die Steuer- oder Regeleinrichtung kann insbesondere dazu konfiguriert sein, dass die im Rahmen der Erfindung verfahrensmäßig formulierten Merkmale, beispielsweise gemäß einem der Ansprüche 8 bis 13, realisiert werden.

Der zu reinigende thermoplastische Kunststoff kann dem in im Wesentlichen reiner Form vorliegenden Wasserdampf ausgesetzt werden.

Bevorzugt besteht ein Schleppgas (beispielsweise im Reinigungsbehälter) zum Reinigen des thermoplastischen Kunststoffs zu mehr als 80 %, bevorzugt mehr als 90 %, besonders bevorzugt mehr als 95 % und ganz besonders bevorzugt mehr als 99 %, aus Wasserdampf.

Der zu reinigende thermoplastische Kunststoff kann dem Wasserdampf zwischen 15 Minuten und 240 Minuten, bevorzugt zwischen 50 Minuten bis 210 Minuten und besonders bevorzugt zwischen 80 Minuten bis 180 Minuten, ausgesetzt werden.

Der Wasserdampf kann eine Temperatur von 90° C bis 150° C aufweisen, wenn er erzeugt wird und/oder wenn der zu reinigende thermoplastische Kunststoff ihm ausgesetzt wird.

Das erfindungsgemäße Verfahren kann kontinuierlich, quasi-kontinuierlich oder schubweise durchgeführt werden.

Das heißt, beispielsweise kann der Reinigungsbehälter mit zu reinigendem thermoplastischem Kunststoff gefüllt werden, anschließend der zu reinigende thermoplastische Kunststoff dem durch den Dampfgenerator erzeugten Wasserdampf ausgesetzt werden und aus dem Reinigungsbehälter herausgenommen werden (schubweise Durchführung).

Alternativ kann, beispielsweise mit vorab festgelegter Frequenz und/oder einer Zellradschleuse, zu reinigender thermoplastischer Kunststoff in den Reinigungsbehälter nachgefüllt werden, während in analoger Weise synchron oder asynchron gereinigter thermoplastischer Kunststoff aus dem Reinigungsbehälter entnommen wird (quasi-kontinuierliche Durchführung).

Alternativ kann zu reinigender thermoplastischer Kunststoff auch kontinuierlich in den Reinigungsbehälter nachgefüllt werden und kontinuierlich entnommen werden (kontinuierliche Durchführung).

Auch Mischformen sind denkbar, beispielsweise ein kontinuierliches Nachfüllen und ein quasi-kontinuierliches Entnehmen.

Wie erwähnt, können diese Verfahrensschritte vermittels der Steuer- oder Regeleinrichtung realisiert werden.

Wie bereits erwähnt, kann der zu reinigende thermoplastische Kunststoff in Form von Pellets und/oder Granulat und/oder Flakes vorliegen, wenn der zu reinigende thermoplastische Kunststoff dem Wasserdampf ausgesetzt wird.

Flakes können beispielsweise beim Schreddern von Kunststoff-Flaschen anfallen.

Flakes können in Form von Spänen vorliegen.

Weitere Vorteile und Einzelheiten der Erfindung ergeben sich aus den Figuren sowie der dazu gehörigen Figurenbeschreibung. Dabei zeigen:
- Fig 1: ein erfindungsgemäßes Ausführungsbeispiel einer Reinigungsvorrichtung zum Reinigen von thermoplastischen Kunststoffen,
- Fig. 2: ein weiteres erfindungsgemäßes Ausführungsbeispiel einer Reinigungsvorrichtung zum Reinigen von thermoplastischen Kunststoffen,
- Fig. 3: ein weiteres erfindungsgemäßes Ausführungsbeispiel einer Reinigungsvorrichtung zum Reinigen von thermoplastischen Kunststoffen sowie
- Fig. 4: ein Diagramm zur Effektivität des erfindungsgemäßen Verfahrens.

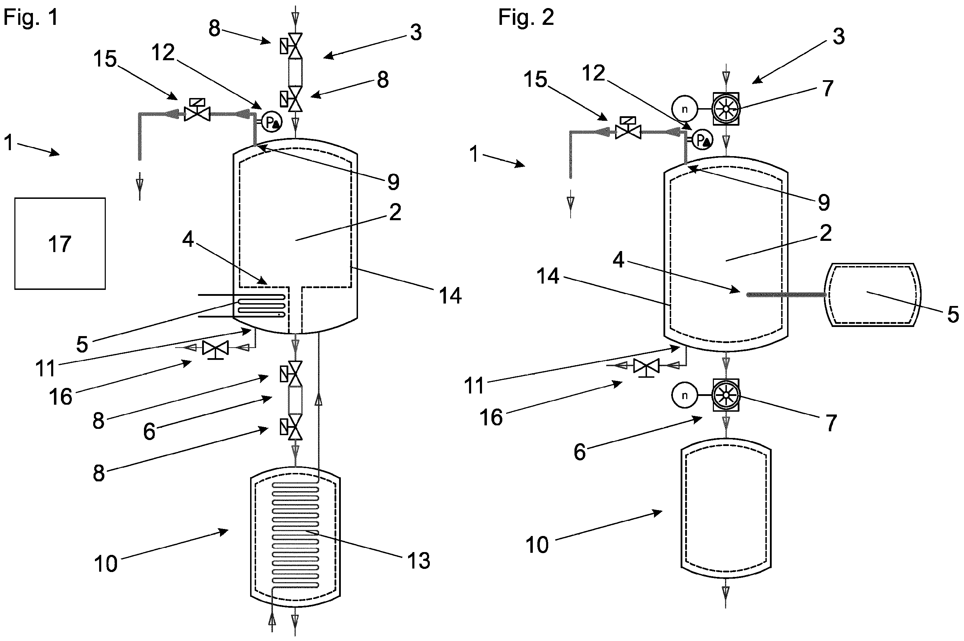

Fig. 1 zeigt ein Ausführungsbeispiel einer Reinigungsvorrichtung 1 zum Reinigen, insbesondere Entgasen, von thermoplastischen Polymeren.

Ein Reinigungsbehälter 2 und ein Dampfgenerator 5 sind in diesem Ausführungsbeispiel in einem gemeinsamen Behälter angeordnet.

Konkret wird in diesem Ausführungsbeispiel Wasser, das im unteren Teil des gemeinsamen Behälters vorhanden ist, erhitzt und dadurch verdampft. Im vorliegenden Ausführungsbeispiel wird das Wasser über eine mit einem Heizstrom beaufschlagte Heizschlange erhitzt.

Der entstehende Wasserdampf gelangt nach oben in den Bereich des Reinigungsbehälters.

Die Gaszufuhröffnung 4 wird in diesem Ausführungsbeispiel also durch einen Querschnitt des gemeinsamen Behälters realisiert.

Durch eine Auskleidung 14 wird verhindert, dass der thermoplastische Kunststoff, der beispielsweise als Granulat zugeführt wird, in den Bereich des Dampfgenerators gelangt.

An den Seitenwänden und dem oberen Teil des gemeinsamen Behälters kann die Auskleidung 14 als Isolation fungieren.

Zum Zuführen des thermoplastischen Kunststoffs ist an der Oberseite des Reinigungsbehälters 2 eine Zufuhrvorrichtung 3 vorgesehen.

In diesem Ausführungsbeispiel weist die Zufuhrvorrichtung 3 zwei Absperrventile 8 auf, welche in Serie geschaltet sind und welche nachrückenden thermoplastischen Kunststoff daran hindern, in den Reinigungsbehälter 2 zu gelangen.

Analog weist die Abfuhrvorrichtung 6 ebenfalls zwei Absperrventile 8 auf, die verhindern, dass gereinigter thermoplastischer Kunststoff unerwünschter Weise aus dem Reinigungsbehälter 2 gelangt.

Die Reinigungsvorrichtung 1 dieses Ausführungsbeispiels kann sowohl schubweise als auch quasi kontinuierlich betrieben werden.

Für einen schubweisen Betrieb werden zunächst die Absperrventile 8 der Zufuhrvorrichtung 3 geöffnet, sodass zu reinigender thermoplastischer Kunststoff in den davor leeren Reinigungsbehälter 2 gefüllt wird. Nachdem der Reinigungsbehälter 2 auf diese Art befüllt ist, werden die Absperrventile 8 der Zufuhrvorrichtung 3 geschlossen und der Reinigungsvorgang beginnt.

Ist der Reinigungsvorgang abgeschlossen, können die Absperrventile 8 der Abfuhrvorrichtung 6 geöffnet werden, sodass der gereinigte thermoplastische Kunststoff aus dem Reinigungsbehälter herausfließt.

Für einen quasi-kontinuierlichen Betrieb kann ausgenützt werden, dass zwischen den Absperrventilen 8 der Zufuhrvorrichtung und der Abfuhrvorrichtung ein gewisses Volumen vorhanden ist, das zur Dosierung verwendet werden kann.

Soll eine gewisse Menge an zu reinigendem thermoplastischen Kunststoff zugeführt werden, kann zunächst das obere Absperrventil 8 der Zufuhrvorrichtung 3 geöffnet werden, sodass sich das erwähnte Volumen mit zu reinigendem thermoplastischen Kunststoff füllt.

Dann wird das obere Absperrventil 8 der Zufuhrvorrichtung 3 geschlossen und das untere Absperrventil 8 der Zufuhrvorrichtung 3 geöffnet, sodass die im erwähnten Volumen vorhandene Menge an zu reinigendem thermoplastischen Kunststoff in den Reinigungsbehälter 2 gelangt.

Analog kann mit der Abfuhrvorrichtung vorgegangen werden.

Auf diese Weise kann thermoplastischer Kunststoff sukzessive und quasi-kontinuierlich im Reinigungsbehälter 2 gereinigt werden.

Der eigentliche Reinigungsvorgang geschieht erfindungsgemäß dadurch, dass der thermoplastische Kunststoff im Reinigungsbehälter 2 dem Wasserdampf ausgesetzt wird, der durch den Dampfgenerator 5 erzeugt wird.

Die verbesserte Effektivität des Reinigungsvorgangs auf diese Weise ist in Verbindung mit Fig. 4 näher beschrieben.

Im Reinigungsbehälter 2 ist eine Entgasungsöffnung 9 vorhanden, über welche Wasserdampf zusammen mit aus dem thermoplastischen Kunststoff entferntem Gas aus dem Reinigungsbehälter 2 austreten kann.

In einer an die Entgasungsöffnung 9 anschließende Leitung sind ein Drucksensor 12 und ein Entgasungsventil 15 vorhanden. Der Wasserdampf im Reinigungsbehälter 2 kann dadurch bei einem gewünschten Druck gehalten werden.

Alternativ oder zusätzlich könnte der Drucksensor 12 auch im Reinigungsbehälter 2 vorgesehen sein.

Es ist außerdem eine Kondensatöffnung 11 vorhanden, mittels welcher kondensiertes oder noch nicht verdampftes Wasser abgeführt werden kann, gegebenenfalls gemeinsam mit Stoffen, die durch die erfindungsgemäße Reinigung aus dem thermoplastischen Kunststoff entfernt wurden und im kondensierten Wasser vorliegen.

In einer an diese Kondensatöffnung 11 anschließende Leitung ist außerdem ein Kondensatventil 16 vorhanden, welche das Abführen des Kondensats oder des noch nicht verdampften Wassers gemeinsam mit den erwähnten Stoffen steuern kann.

Anschließend an die Abfuhrvorrichtung 6 ist eine Trocknungsvorrichtung 10 zum Trocknen des gereinigten thermoplastischen Kunststoffs vorgesehen.

Im vorliegenden Ausführungsbeispiel geschieht das Trocknen durch zugeführte Heiß- oder Kaltluft.

In der Trocknungsvorrichtung 10 ist außerdem ein Wärmetauscher 13 vorgesehen.

Der Wärmetauscher 13 ist in diesem Ausführungsbeispiel als mäandrierendes Rohr ausgebildet, welches durch die Trocknungsvorrichtung 10 führt und welches mit dem Dampfgenerator 5 verbunden ist.

Wasser wird durch den Wärmetauscher 13 geleitet und durch die in der Trocknungsvorrichtung 10 vorhandene Wärme vorgewärmt. Anschließend gelangt es im vorgewärmten Zustand in den Reservoir-Bereich des Dampfgenerators 5.

Symbolisch dargestellt ist eine Steuer- oder Regeleinrichtung 17, welche in diesem Ausführungsbeispiel mit dem Drucksensor 12, den Absperrventilen 8 der Zufuhrvorrichtung 3 und der Abfuhrvorrichtung 6, dem Dampfgenerator 5, dem Kondensatventil sowie dem Entgasungsventil 15 signalverbunden ist.

Die Steuer- oder Regeleinrichtung 17 kann die Zufuhrvorrichtung 3 und die Abfuhrvorrichtung 6 zum schubweisen oder quasi-kontinuierlichen Betrieb ansteuern, wie dies etwas weiter oben beschrieben wurde.

Des Weiteren kann die Steuer- oder Regeleinrichtung 17 einen Öffnungsgrad des Entgasungsventils 15 und/oder eine Dampferzeugungsleistung des Dampfgenerators 5 auf Basis der Messsignale des Drucksensors 12 steuern oder regeln.

Natürlich können noch weitere Sensoren, wie beispielsweise ein Temperatursensor und/oder ein Füllstandssensor vorhanden sein, deren Messsignale für eine solche Steuerung oder Regelung oder andere Steuerung oder Regelungen (beispielsweise des Kondensatventils 16) herangezogen werden können.

Fig. 2 zeigt ein weiteres Ausführungsbeispiel einer Reinigungsvorrichtung 1.

Ein erster Unterschied zwischen der Reinigungsvorrichtung 1 gemäß Fig. 1 und jener gemäß Fig. 2 besteht darin, dass der Dampfgenerator 5 separat vom Reinigungsbehälter 2 ausgeführt ist.

Die Auskleidung 14 kann dadurch komplett als Isolation 14 ausgebildet sein.

Die grundsätzliche Funktionsweise ist aber analog zu der in Fig. 1, das heißt durch den Wasserdampf werden unerwünschte Gase aus dem thermoplastischen Kunststoff ausgewaschen.

Ein weiterer Unterschied zwischen der Reinigungsvorrichtung 1 gemäß Fig. 1 und jener gemäß Fig. 2 besteht darin, dass die Zufuhrvorrichtung 3 und die Abfuhrvorrichtung 6 nicht mittels Absperrventilen 8, sondern durch Zellradschleusen 7 realisiert sind.

Prinzipiell erlauben diese ebenso sowohl einen schubweisen als auch einen quasi-kontinuierlichen Betrieb. Bevorzugt wird die Ausführungsform aus Fig. 2 aber quasi-kontinuierlich betrieben.

Das heißt, mittels der Zellradschleusen 7 wird quasi-kontinuierlich zu reinigender thermoplastischer Kunststoff nachgefüllt und gereinigter thermoplastischer Kunststoff aus dem Reinigungsbehälter 2 entnommen.

Wie diesbezüglich in Fig. 2 symbolisch angedeutet ist, können die Zellradschleusen 7 dafür mit einer festgelegten Drehzahl n pro Stunde gedreht werden.

Auch bei der Ausführung nach Fig. 2 könnte prinzipiell eine Vorwärmung für den Dampfgenerator 5 vorgesehen sein, die mit Wärme aus der Trocknungsvorrichtung 10 gespeist wird. Im in Fig. 2 abgebildeten Ausführungsbeispiel ist das aber nicht vorgesehen.

Es ist noch zu erwähnen, dass auch die Ausführung nach Fig. 2 eine Steuer- oder Regeleinrichtung 17 aufweist, die analog funktioniert, insbesondere die Zellradschleusen 7 statt die Absperrventile 8 ansteuert, aber nicht dargestellt ist.

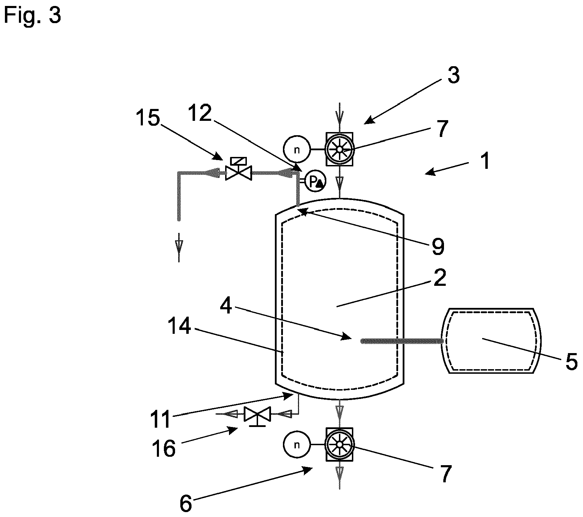

Fig. 3 zeigt eine Ausführungsform, welche ähnlich zu jener aus Fig. 2 ist, wobei jedoch keine Trocknungsvorrichtung 10 vorgesehen ist. Das heißt, die Erfindung kann ohne weiteres auch ohne eine Trocknungsvorrichtung 10 eingesetzt werden.

Es ist zu bemerken, dass die verschiedenen Elemente der hier beschriebenen Ausführungsformen durchaus unterschiedlich miteinander kombiniert werden können.

Beispielsweise könnten auch bei der Ausführung nach Fig. 1 Zellradschleusen 7 statt - oder teilweise statt- den Absperrventilen 8 verwendet werden.

Fig. 4 zeigt ein Diagramm einer Messung zur Effektivität der erfindungsgemäßen Reinigung mittels Wasserdampfs.

Aufgetragen sind mg D-Limonen, die pro kg im Kunststoff vorliegen, über die verstrichene Zeit, während der Kunststoff dem Wasserdampf ausgesetzt war.

D-Limonen werden gewöhnlich als Messwerte für die Geruchsbelastung von Kunststoffen herangezogen, weil diese Verbindungen am schwersten aus dem Kunststoff zu entfernen sind und daher am spätesten aus dem Kunststoff ausgewaschen werden.

Wie sich aus dem Diagramm aus Fig. 4 eindeutig ergibt, fällt die Konzentration der D-Limonen im zu reinigenden Kunststoff gleich zu Beginn sehr steil ab, das heißt, gleich zu Beginn wird eine große Menge der zu entfernenden Gase und anderen Stoffe ausgewaschen.

Tatsächlich ist bereits nach etwa 15 Minuten eine Konzentration erreicht, die beim Entgasen mit Heißluft erst nach drei oder mehr Stunden erreicht werden kann.

Durch eine Verweilzeit zwischen einer oder zwei Stunden können darüber hinaus erfindungsgemäß viel geringere Konzentrationen als mit Heißluft erreicht werden, obwohl immer noch ein Zeitvorteil gegeben ist.

Wie bereits erwähnt, werden andere Gase und/oder andere unerwünschte Stoffe schneller als die erwähnten D-Limonen aus dem thermoplastischen Kunststoff entfernt.

Es ist noch darauf hinzuweisen, dass die gezeigten Ausführungsbeispiele durchaus stark modifiziert verwendet werden können. Beispielsweise ist es nicht notwendig, dass die Vorschubrichtung für den thermoplastischen Kunststoff vertikal nach unten gerichtet ist. Werden geeignete Fördervorrichtungen vorgesehen, kann beispielsweise auch ein horizontaler Vorschub realisiert werden.

Ebenso wenig muss der thermoplastische Kunststoff immer strikt von der flüssigen Phase getrennt sein.

Der Wasserdampf, dem der zu reinigende thermoplastische Kunststoff ausgesetzt wird, muss, wie erwähnt, nicht zu 100 % rein sein. Prinzipiell wäre es auch denkbar, den Wasserdampf mit einer gewünschten Geruchskomponente zu versehen. In bevorzugten Ausführungsbeispielen ist der Wasserdampf aber so rein wie möglich, um ein möglichst geruchsneutrales Verfahrensprodukt zu erzielen.

### Legende

zu den Hinweisziffern:
1 Reinigungsvorrichtung
2 Reinigungsbehälter
3 Zufuhrvorrichtung
4 Gaszufuhröffnung
5 Dampfgenerator
6 Abfuhrvorrichtung
7 Zellradschleuse
8 Absperrventil
9 Entgasöffnung
10 Trocknungvorrichtung
11 Kondensatöffnung
12 Drucksensor
13 Wärmetauscher
14Auskleidung / Isolation
15 Entgasungsventil
16 Kondensatventil
17 Steuer- oder
   Regeleinrichtung.

## Patentansprüche

1. Reinigungsvorrichtung zum Reinigen, insbesondere Entgasen, von thermoplastischen Kunststoffen, insbesondere Polyolefinen, mit einem Reinigungsbehälter (2) für den zu reinigenden thermoplastischen Kunststoff und einer Zufuhrvorrichtung (3) zum Zuführen des zu reinigenden thermoplastischen Kunststoffs in den Reinigungsbehälter (2) in schüttfähiger Form, wobei der Reinigungsbehälter (2) eine Gaszufuhröffnung (4) aufweist, **dadurch gekennzeichnet, dass** ein Dampfgenerator (5) zum Erzeugen von Wasserdampf vorgesehen ist, welcher zum Zuführen des Wasserdampfs zum Reinigungsbehälter (2) mit der Gaszufuhröffnung (4) verbunden ist.

2. Reinigungsvorrichtung nach Anspruch 1, **dadurch gekennzeichnet, dass** eine Abfuhrvorrichtung (6) zum Abführen des gereinigten thermoplastischen Kunststoffs aus dem Reinigungsbehälter (2) vorgesehen ist.

3. Reinigungsvorrichtung nach einem der vorhergehenden Ansprüche, **dadurch gekennzeichnet, dass** die Zufuhrvorrichtung (3) und/oder die Abfuhrvorrichtung (6) eine Zellradschleuse (7) und/oder zumindest ein Absperrventil (8) aufweist.

4. Reinigungsvorrichtung nach einem der vorhergehenden Ansprüche, **dadurch gekennzeichnet, dass** der Reinigungsbehälter (2) eine Entgasungsöffnung (9) zum Abführen von Wasserdampf zusammen mit aus dem thermoplastischen Kunststoff entwichenen Gasen aufweist.

5. Reinigungsvorrichtung nach einem der vorhergehenden Ansprüche, **dadurch gekennzeichnet, dass** dem Reinigungsbehälter (2) eine Trocknungsvorrichtung (10) für den gereinigten thermoplastischen Kunststoff nachgeschaltet ist.

6. Reinigungsvorrichtung nach einem der vorhergehenden Ansprüche, **dadurch gekennzeichnet, dass** der Reinigungsbehälter (2) eine Kondensatöffnung (11) zum Abführen von kondensiertem Wasser - gegebenenfalls zusammen mit aus dem thermoplastischen Kunststoff entwichenen Stoffen - aus dem Reinigungsbehälter (2) aufweist.

7. Reinigungsvorrichtung nach einem der vorhergehenden Ansprüche, **dadurch gekennzeichnet, dass** eine Steuer- oder Regeleinrichtung (17) zum Steuern oder Regeln zumindest eines der folgenden vorgesehen ist: Dampfgenerator (5), Zufuhrvorrichtung (3), Abfuhrvorrichtung (6), zumindest ein Ventil an der Entgasungsöffnung (9) und/oder der Kondensatöffnung (11).

8. Verfahren zum Reinigen, insbesondere Entgasen, von thermoplastischen Kunststoffen, insbesondere Polyolefinen, vorzugsweise unter Verwendung einer Reinigungsvorrichtung (1) nach einem der vorhergehenden Ansprüche, wobei Wasserdampf generiert wird und ein zu reinigender thermoplastischer Kunststoff in schüttfähiger Form dem Wasserdampf ausgesetzt wird.

9. Verfahren nach Anspruch 8, **dadurch gekennzeichnet, dass** der zu reinigende thermoplastische Kunststoff dem in im Wesentlichen reiner Form vorliegenden Wasserdampf ausgesetzt wird.

10. Verfahren nach Anspruch 8 oder 9, **dadurch gekennzeichnet, dass** der zu reinigende thermoplastische Kunststoff dem Wasserdampf zwischen 15 Minuten und 240 Minuten, bevorzugt zwischen 50 Minuten bis 210 Minuten und besonders bevorzugt zwischen 80 Minuten bis 180 Minuten, ausgesetzt wird.

11. Verfahren nach einem der Ansprüche 8 bis 10, **dadurch gekennzeichnet, dass** der Wasserdampf eine Temperatur von 90° C bis 150° C aufweist, wenn er erzeugt wird und/oder wenn der zu reinigende thermoplastische Kunststoff ihm ausgesetzt wird.

12. Verfahren nach einem der Ansprüche 8 bis 11, **dadurch gekennzeichnet, dass** der zu reinigende thermoplastische Kunststoff in Form von Pellets und/oder Granulat und/oder Flakes vorliegt, wenn der zu reinigende thermoplastische Kunststoff dem Wasserdampf ausgesetzt wird.

13. Verfahren nach einem der Ansprüche 8 bis 12, **dadurch gekennzeichnet, dass** das Verfahren kontinuierlich, quasi-kontinuierlich oder schubweise durchgeführt wird.

14. Gereinigter, insbesondere entgaster, recyclierter thermoplastischer Kunststoff, erhältlich nach einem Verfahren gemäß einem der Ansprüche 8 bis 13.

15. Verwendung eines Dampfgenerators (5) zum Erzeugen von Wasserdampf beim Reinigen, insbesondere Entgasen, von thermoplastischen Kunststoffen, insbesondere Polyolefinen.
